# EUROPÄISCHE PATENTSCHRIFT

(11) **EP 3 065 596 B1**
(45) Veröffentlichungstag und Bekanntmachung des Hinweises auf die Patenterteilung: **14.06.2017**
(21) Anmeldenummer: 14789130.3
(22) Anmeldetag: 19.09.2014
(51) Int. Cl.: A47B 88/40, A47B 88/437, A47B 88/487

(54) **SCHUBLADENAUSZIEHFÜHRUNG**
DRAWER PULL-OUT GUIDE
GLISSIÈRE TÉLESCOPIQUE POUR TIROIR

(30) Priorität: 04.11.2013 AT 8422013
(43) Veröffentlichungstag der Anmeldung: 14.09.2016
(73) Patentinhaber: Julius Blum GmbH, 6973 Höchst (AT)
(72) Erfinder: VIOLAND, Wilfried, A-6974 Gaissau (AT)
(74) Vertreter: Torggler & Hofinger Patentanwälte
(86) Internationale Anmeldenummer: PCT/AT2014/000172
(87) Internationale Veröffentlichungsnummer: WO 2015/061814

(56) Entgegenhaltungen:
- AT-U1- 8 732
- DE-A1- 19 751 164
- DE-A1-102005 017 417

## Beschreibung

Die Erfindung betrifft Schubladenausziehführung, umfassend:
- eine an einem Möbelkorpus zu befestigende Korpusschiene,
- zumindest eine Ausziehschiene, welche relativ zur Korpusschiene zwischen einer Offenstellung und einer Schließstellung verschiebbar gelagert ist,
- zumindest eine Hubvorrichtung, durch welche die Ausziehschiene gegen Ende der Schließbewegung relativ zur Korpusschiene anhebbar ist,

Derartige Schubladenausziehführungen sind bereits bekannt und werden beispielsweise in der EP 1959794 B1 genannt. Bei herkömmlichen Schubladenausziehführungen kann das Problem bestehen, dass die zwischen den Ausziehschienen befindlichen Wälzkörper permanent einwirkenden Kräfte deformiert werden können. Diese Kräfte resultieren beispielsweise aus dem Gewicht einer befüllten Schublade. Vor allem im geschlossenen Zustand der Schubladenausziehführung ist die Krafteinwirkung auf die Wälzkörper höher, als während dem Ausziehvorgang der Schublade. Die Deformation der Wälzkörper äußerst sich in einem ratternden Geräusch und einem unruhigen Gleiten beim Öffnen und Schließen der Schublade. Schubladenausziehführungen, welche eine Lagervorrichtung in einem vorderen Endbereich zumindest einer Ausziehschiene angeordnet aufweisen, entlasten die zwischen den Schienen liegenden Wälzkörper und schützen diese vor Deformation. Im Weiteren bewirkt diese Lagervorrichtung, dass die Schublade im Schließzustand leicht angehoben und eine unerwünschte Absenkung der Schublade verhindert wird. Somit können die horizontal verlaufenden Fugen zwischen den Frontblenden von übereinander angeordneten Schubladen eines Schrankes eine konstante Breite aufweisen, sodass das von außen sichtbare Fugenbild auch optisch ansprechend ist. Aufgrund des auf die Lagevorrichtung einwirkenden Gewichtes der Schublade ist es sinnvoll, die Lagervorrichtung aus einem widerstandsfähigen Material, wie beispielsweise Metall, zu fertigen. Auch nach langer Verwendungszeit der Schublade ist durch die, beispielsweise als metallischer Stützwälzkörper ausgebildete, Lagervorrichtung gewährleistet, dass diese ihren Zweck über eine lange Laufzeit der Schubladenausziehführung erfüllt. Dabei gibt es jedoch einen Nachteil. Besteht die Lastvorrichtung beispielsweise aus einem widerstandsfähigen, harten Material, wie beispielsweise Metall, erzeugt diese aufgrund ihrer Materialhärte Geräusche beim Zusammenwirken mit der zumindest einen Auszugschiene. Zum Beispiel: wird ein Stützwälzkörper aus Metall als Lastvorrichtung verwendet, entstehen über die ebenfalls metallisch ausgeformten Laufstege stärkere Abrollgeräusche beim Einfahren der Schublade als bei der Verwendung einer weicheren Kunststoffrolle. Diese Geräusche sind, genauso wie die Deformation der Wälzkörper und ein ungleichmäßiges Fugenbild an den Frontblenden, unerwünscht. Eine Ausziehführung gemäß dem Oberbegriff des Anspruchs 1 ist aus der DE19751164A1 bekannt. Die Erfindung soll daher unter Vermeidung der vorher beschriebenen Nachteile eine Schubladenausziehführung anzeigen, welche beim Einfahren in den geschlossenen Zustand einer Schublade ein geräuschreduziertes Anheben der Ausziehschienen durch eine Anhebevorrichtung ermöglicht. Im geschlossenen Zustand sollten die Ausziehschienen durch eine widerstandsfähige Lagervorrichtung gestützt und die Wälzkörper entlastet werden. Dabei sollte sich ein gleichmäßiges Fugenbild an den Frontblenden bilden.
Dies wird erfindungsgemäß dadurch gelöst, dass die Hubvorrichtung zumindest zweiteilig ausgebildet ist, wobei die Hubvorrichtung eine Anhebevorrichtung zum Anheben der Ausziehschiene sowie eine Lagervorrichtung zum Abstützen der Ausziehschiene in der Schließstellung aufweist, wobei die Anhebevorrichtung in der Schließstellung der Ausziehschiene von der Ausziehschiene entlastet ist.
Weitere vorteilhafte Ausgestaltungen der Erfindung sind in den abhängigen Unteransprüchen angegeben.
Wird eine Hubvorrichtung aus weicherem Material - verglichen mit der Materialhärte der Lagervorrichtung - verwendet, übernimmt die Hubvorrichtung die Aufgabe des Anhebens der Schienen geräuschreduziert. Die Schublade wird dadurch in einem Bereich vor ihrer eingefahrenen Endposition durch die weichere Hubvorrichtung angehoben, in der Endposition durch den beispielsweise metallischen Stützwälzkörper statisch getragen.

Weitere Einzelheiten und Vorteile der vorliegenden Erfindung werden anhand der Figurenbeschreibung unter Bezugnahme auf die in den Zeichnungen dargestellten Ausführungsbeispiele im Folgenden näher erläutert. Darin zeigen:
- Fig. 1: Ein Möbelstück ausgebildet aus einem Korpus mit Schubladen auf Schubladenausziehführungen,
- Fig. 2: Ein Ausführungsbeispiel einer Schubladenausziehführung in einer Explosionsdarstellung,
- Fig. 3: Einen vorderen Endbereich einer Schubladenausziehführung im Querschnitt,
- Fig. 4a - 4d: eine schematische Darstellung der Schubladenausziehführung mit verschiedenen Positionen der Ausziehschiene,
- Fig. 5a - 5c: Seitenansichten der Schubladenausziehführung mit verschiedenen Positionen der Ausziehschiene,
- Fig. 6a bis 6b: eine schematische Darstellung eines Ausführungsbeispieles einer einstückig ausgebildeten Hubvorrichtung,
- Fig. 7: der vordere Bereich einer Schubladenausziehführung im ausgefahrenen Zustand, in einer Ansicht von unten.

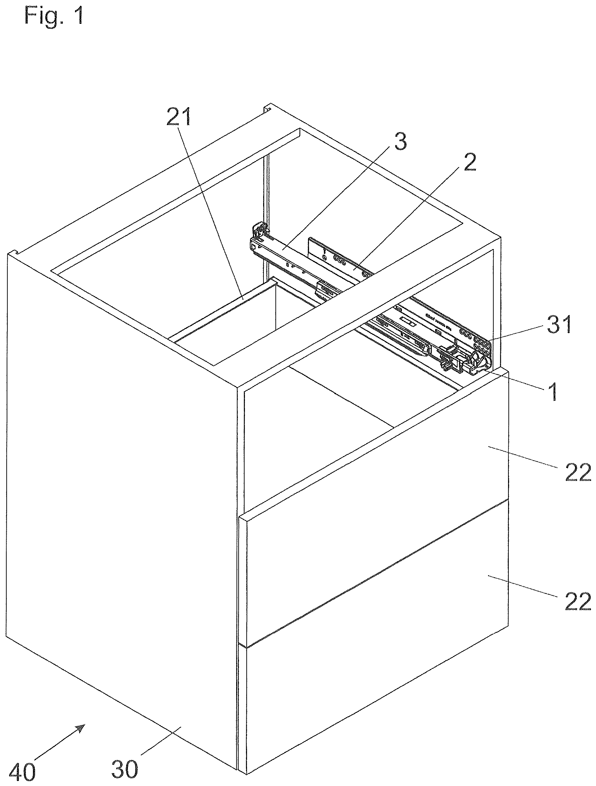

Fig. 1 zeigt ein Möbelstück 40, gebildet aus einem Korpus 30. Die Korpusschiene 2 wird über ihren Befestigungsbereich 31 mit dem Korpus 30 verbunden, die Schubladen 21 werden seitlich an den Auszugsschienen 3a, 3b befestigt und sind in den Korpus 30 verschiebbar. Im eingefahrenen Zustand der Schublade 21 schließt die Frontblende 22 mit dem Korpus 30 ab.

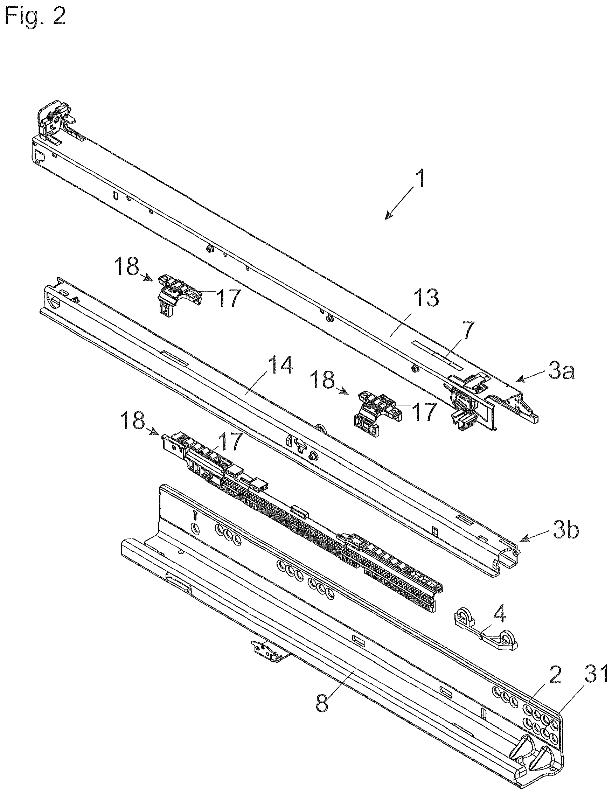

Fig. 2 zeigt eine Schubladenausziehführung in einer Explosionsdarstellung mit ihren einzelnen Baugruppen. Die Ausziehschienen 3a, gebildet aus einer Ladenschiene 13, welche mit der Schublade verbindbar ist und die Ausziehschienen 3b, einer zwischen Ladenschiene 13 und Korpusschiene 30 befindlichen Mittelschiene 14, sind über die Laufwägen 18 relativ zueinander und relativ zur Korpusschiene 3 längsverschiebbar gelagert. In den Laufwägen 18 befindet sich eine Vielzahl von Wälzkörpern 17, welche sich über den Laufsteg 8 der Korpusschiene 2 und der Auszugschiene 3a, 3b abrollen. Mit dieser Laufbahn 8 und der Erhöhung 7 wirkt die Hubvorrichtung 4 zusammen, sobald die Schubladenausziehführung 1 sich schließt. Die Erhöhung 7 ist in diesem Ausführungsbeispiel durch eine Prägung an der Auszugsschiene 3a ausgebildet. In einem weiteren Ausführungsbeispiel kann sich die Erhöhung 7 auch an der Korpusschiene 2 befinden oder durch diese ausgebildet werden.

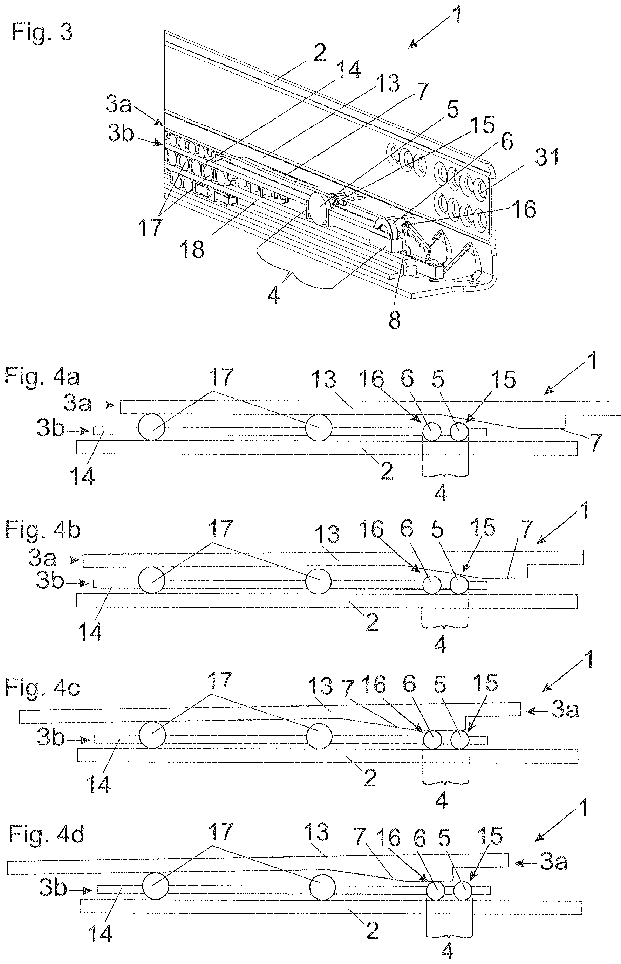

Die Fig. 3 zeigt den vorderen Endbereich einer Schubladenausziehführung 1, auf welcher die Ausziehschienen 3a, 3b, beispielsweise aus Mittelschiene 14 und Ladenschiene 13 bestehend, längsbeweglich gelagert sind. Neben den Wälzkörpern 17 befindet sich auch die Hubvorrichtung 4 zwischen den Schienen 2, 3a, 3b der Schubladenausziehführung 1. Diese besteht aus der Anhebevorrichtung 5 mit dem Hubwälzkörper 15 und der Lagervorrichtung 6 mit dem Stützwälzkörper 16. Auf der Ladenschiene 13 befindet sich eine rampenähnliche Erhöhung 7, welche gegen Ende der Einschubbewegung der Ausziehschienen 3a, 3b in Relation zueinander und zur Korpusschiene 2 den Kontakt zur Anhebevorrichtung 5 oder zur Lagevorrichtung 6 aufnimmt.

Fig. 4a zeigt eine Schubladenausziehführung 1 bestehend aus einer Korpusschiene 2 und den Ausziehschienen 3a, 3b, zwischen welchen sich die Wälzkörper 17 und die Hubvorrichtung 4 befinden. Die Hubvorrichtung 4 besteht in diesem Ausführungsbeispiel aus der Anhebevorrichtung 5 und der Lagervorrichtung 6, welche als Hubwälzkörper 15 und Stützwälzkörper 16 ausgebildet sind. In der gezeigten Position der Ladenschiene 12 relativ zur Korpusschiene 2 liegt die Mittelschiene 14 und die Ladenschiene 13 nur auf den Wälzkörpern 17 auf. Die Hubvorrichtung 4 hat keinen Kontakt zur Ausziehschiene 3. Somit liegt die ganze Last der Schublade 21 auf den Wälzkörpern 17

Die Fig. 4b zeigt schematisch eine Schubladenausziehführung 1 in einem Bereich in Richtung eingefahrenen Zustand der Schublade 21, wobei nun die Anhebevorrichtung 5 mit der Erhöhung 7 zusammenwirkt. Aufgrund der schematischen Darstellung der Schubladenausziehführung 1 sind in der Fig. 4a bis zur Fig. 4b nur jeweils zwei Wälzkörper 17 eingezeichnet. Wie man in Fig. 1 erkennen kann, beinhaltet die Schubladenausziehführung 1 nicht nur zwei Wälzkörper 17, sondern eine Mehrzahl von Wälzkörpern 17. Die Wälzkörper 17 werden nun bei einem weiteren Einfahren der Schublade 21 durch das Anheben der Ausziehschienen 3a, 3b sukzessiv vom Gewicht der Schublade 21 entlastet. Das Anheben der Ladenschiene 13 und der Mittelschiene 14 erfolgt durch das Zusammenwirken der Anhebevorrichtung 5 und der Erhöhung 7.

Fig. 4c zeigt in schematischer Darstellung die Schubladenausziehführung 1, wobei die Ausziehschiene 3a, 3b noch weiter in Richtung Endlage eingeschoben worden ist als in Fig. 4b abgebildet. In dieser Position der Ausziehschienen 3a, 3b relativ zur Korpusschiene 2, übernehmen die Anhebevorrichtung 5 und die Lagervorrichtung 6 zusammenwirkend mit der Erhöhung 7 einen Großteil des Gewichtes der Schublade. Die Wälzkörper 17 sind nun im Wesentlichen fast vollständig vom Gewicht der Schublade 21 entlastet. Schubladen 21 zeichnen sich oft aufgrund ihrer Bauweise, Befüllung und der Frontblenden 22 Kopflastig aus und belasten den vorderen Endbereich einer Schubladenausziehführung 1 stärker als den hinteren. Somit sind die hinten liegenden Wälzkörper 17 generell geringer belastet als die vorderen.

Die Fig. 4d zeigt schematisch eine Schubladenausziehführung 1, wobei sich die Schublade hier in einem eingefahrenen Zustand befindet. Dabei ist zu erkennen, dass die Lagevorrichtung 6, bestehend aus dem Stützwälzkörper 16 nun zusammen mit der Erhöhung 7 und einem gering durch Gewicht beanspruchten Teil der Wälzkörper 17 die Ausziehschiene trägt. Die Anhebevorrichtung 5 hat keinen Kontakt mehr zur Erhöhung 7 und ist in ihrer hier gezeigten Position wirkungslos. Somit wird die gesamte Last der Schublade auf die Lagervorrichtung 6, mit anderen Worten, dem Stützwälzkörper 16, und einem kleinen Teil der Wälzkörper 17 aufgeteilt. Der Großteil der Wälzkörper 17 und auch die Anhebevorrichtung 5 sind im entlasteten Zustand und somit vor Deformation geschützt.

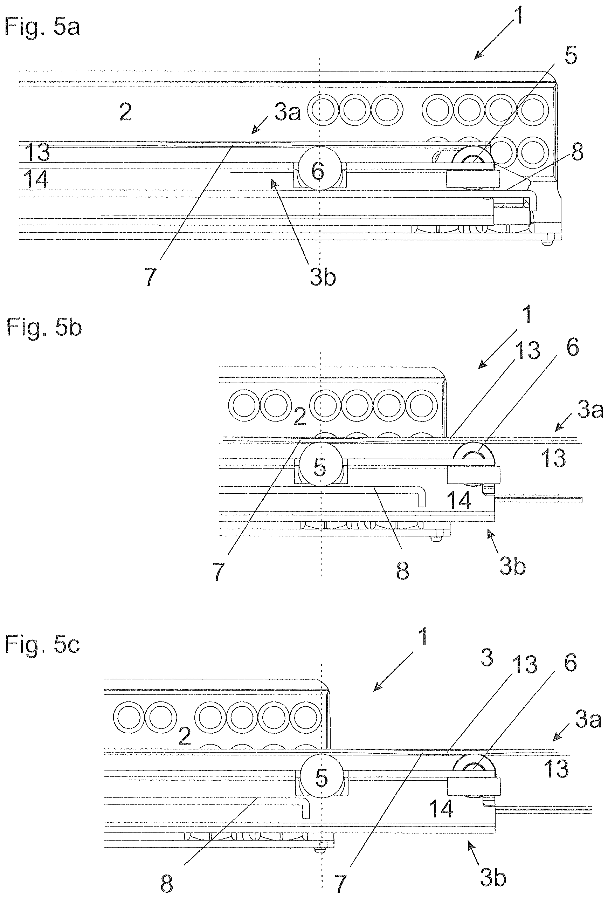

Die Fig. 5a zeigt einen Teil einer Schubladenausziehführung 1 in der Seitenansicht, deutlich zu erkennen ist dabei die Erhöhung 7. In dieser Zeichnung ist erkennbar, dass weder die Anhebevorrichtung 5 noch die Lagervorrichtung 6 mit der Erhöhung 7 zusammenwirkt.

Die Fig. 5b zeigt ein Ausführungsbeispiel einer Schubladenausziehführung 1 in der Seitenansicht, wobei sich eine der Auszugsschienen 3a - die Ladenschiene 13 - in einem Bereich vor der Endposition der Schublade 21 befindet. Die Hubvorrichtung 5, ausgebildet als Hubwälzkörper 15, hat Kontakt zur Erhöhung 7 und hebt die Ladenschiene 13 vorbereitend für die Lagerung durch die Lagervorrichtung 6 an. Die Lagervorrichtung 6, ausgebildet als Stützwälzkörper 16, hat in dieser Position der Schienen 2, 3a, 3b noch keinen Kontakt zur Erhöhung 7, ist somit vom Gewicht der Schublade 21 entlastet.

Die Fig. 5c zeigt, wie die Lagervorrichtung 6, ausgebildet als Stützwälzkörper 16, sich auf der Erhöhung 7 befindet und wie die Anhebevorrichtung 5, ausgebildet als Hubwälzkörper 15, entlastet wird.

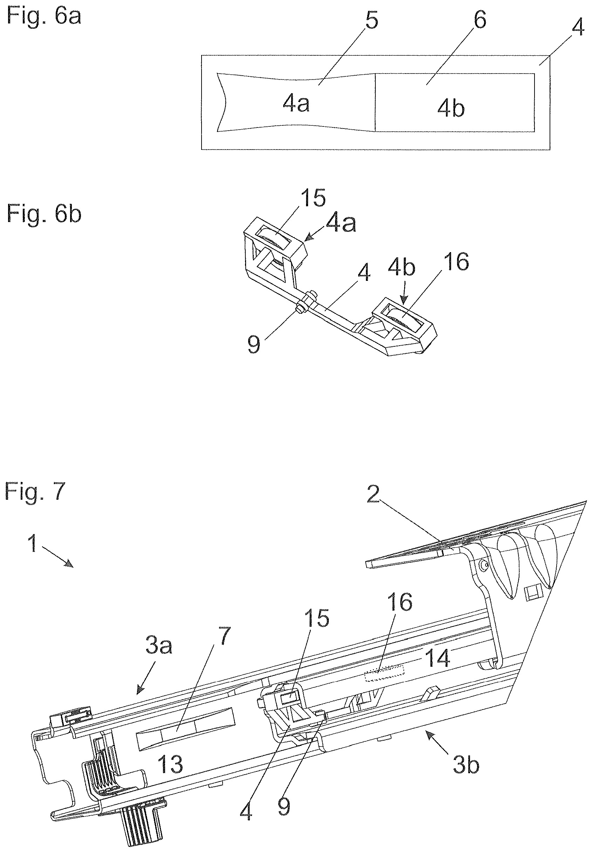

Die Fig. 6a zeigt schematisch dargestellt die Hubvorrichtung 4, beinhaltend einen ersten Bereich 4a und einen zweiten Bereich 4b. Der erste Bereich 4a ist der Wirkbereich der Anhebevorrichtung 5, der zweite Bereich 4b ist der Wirkbereich der Lagervorrichtung 6. Wie bereits in den vorigen Figurenbeschreibungen gezeigt, wirkt die Erhöhung 7 - in dieser Figur nicht dargestellt - zuerst beim Einfahren der Schublade 21 mit der Anhebevorrichtung 5 zusammen; bei einem weiteren Einfahren der Schublade mit der Lagervorrichtung 6. Wird nun der Bereich 4a aus einem weicheren Material, wie beispielsweise einem weichen Kunststoff gefertigt, so können Geräusche der Schubladenausziehführung 1 reduziert werden. Statisch gesehen eignet sich widerstandsfähigeres Material, wie beispielsweise Metall, besser zum Stützen der Schublade 21 als der weichere Kunststoff aus dem Bereich 4a. Der Bereich 4b beinhaltet die Lagervorrichtung 6, welche nun verglichen mit dem weichen Kunststoff aus einem härteren, widerstandsfähigeren Material gefertigt werden kann. Hier wird beispielsweise ein Metall verwendet, welches sich durch eine höhere Verschleißfestigkeit und Formstabilität auszeichnet als der Kunststoff des Bereiches 4a. Somit wird im eingefahrenen Zustand der Schublade diese über den Bereich 4b, in anderen Worten, der Lagervorrichtung 6, abgestützt. Der Bereich 4a wird in diesem Fall entlastet. Ein weiches, leises Auffahren und Anheben der Schublade 21 durch den Bereich 4a und ein langfristig stabiles, widerstandsfähiges Stützen der Schublade 21 durch den Bereich 4b ist somit gewährleistet.

Die Fig. 6b zeigt die Hubvorrichtung 4 mit den zwei Bereichen 4a und 4b. In diesem Ausführungsbeispiel sind die zwei Bereiche durch einen Hubwälzkörper 15 und einen Stützwälzkörper 16 ausgeformt. Die Hubvorrichtung 4 ist durch ein Lager 9 mit der zumindest einen Ausziehschiene 3a, 3b wippend verbunden. Die Anordnung aus Hubvorrichtung 4 mit dem Hubwälzkörper 15 und dem Stützwälzkörper 16 können sich somit dem Laufsteg 8 und der Erhöhung 7 durch das wippende Lager 9 anpassen.

Die Fig. 7 zeigt einen Teilbereich einer Schubladenausziehführung 1, bestehend aus einer Korpusschiene 2, und den Ausziehschienen 3a, 3b - beispielsweise der Mittelschiene 14 und der Ladenschiene 13.
Im eingefahrenen Zustand der Schublade 21 stützt beim Zusammenwirken von Hubvorrichtung 4 und Erhöhung 7 das Lager 9 die Mittelschiene 14 ab, während die Ladenschiene 13 durch den Hubwälzkörper 15 und den Stützwälzkörper 16 angehoben wird.
Somit sind die in der Fig. 6 nicht ersichtlichen Wälzkörper 17 unterhalb und oberhalb der Mittelschiene 14 entlastet, da die Gewichtskraft direkt von der Ladenschiene 13 über den strichliert gezeichneten Stützwälzkörper 16 an die Korpusschiene 2 abgegeben wird.

## Patentansprüche

1. Schubladenausziehführung (1), umfassend:
- eine an einem Möbelkorpus zu befestigende Korpusschiene (2),
- zumindest eine Ausziehschiene (3a, 3b), welche relativ zur Korpusschiene (2) zwischen einer Offenstellung und einer Schließstellung verschiebbar gelagert ist,
- zumindest eine Hubvorrichtung (4), durch welche die Ausziehschiene (3a, 3b) gegen Ende der Schließbewegung relativ zur Korpusschiene (2) anhebbar ist,
wobei die Hubvorrichtung (4) zumindest zweiteilig ausgebildet ist, wobei die Hubvorrichtung (4) eine Anhebevorrichtung (5) zum Anheben der Ausziehschiene (3a, 3b) sowie eine Lagervorrichtung (6) zum Abstützen der Ausziehschiene (3a, 3b) in der Schließstellung aufweist, **dadurch gekennzeichnet, dass** die Anhebevorrichtung (5) in der Schließstellung der Ausziehschiene (3a, 3b) von der Ausziehschiene (3a, 3b) entlastet ist.

2. Schubladenausziehführung nach Anspruch 1, **dadurch gekennzeichnet, dass** die Ausziehschiene (3a, 3b) eine zur Korpusschiene (2) und/oder die Korpusschiene (2) eine zu den Ausziehschienen (3a, 3b) hin weisende Erhöhung (7) aufweist.

3. Schubladenausziehführung nach Anspruch 2, **dadurch gekennzeichnet, dass** die Ausziehschiene (3a, 3b) durch das Zusammenwirken der Erhöhung (7) mit der Anhebevorrichtung (5) anhebbar ist und dass sich die Erhöhung (7) in der Schließstellung an der Lagervorrichtung (6) abstützt.

4. Schubladenausziehführung nach Anspruch 2 oder 3, **dadurch gekennzeichnet, dass** die Erhöhung (7) von einer Prägung der Ausziehschiene (3a, 3b) und/oder der Korpusschiene (2) gebildet ist.

5. Schubladenausziehführung nach einem der Ansprüche 1 bis 4, **dadurch gekennzeichnet, dass** die Anhebevorrichtung (5) von einem ersten Bereich (4a) und die Lagervorrichtung (6) von einem zweiten Bereich (4b) ausgebildet ist, wobei der ers 9 und der zweite Bereich (4a, 4b) miteinander verbunden sind.

6. Schubladenausziehführung nach Anspruch 5, **dadurch gekennzeichnet, dass** der erste Bereich (4a), welcher von der Hubvorrichtung (4) gebildet ist, weicher als der zweite Bereich (4b) ausgebildet und/oder aus einem anderen Material als der zweite Bereich (4b) gebildet ist.

7. Schubladenausziehführung nach einem der Ansprüche 1 bis 4, **dadurch gekennzeichnet, dass** die Anhebevorrichtung (5) zumindest einen Hubwälzkörper (15) aufweist.

8. Schubladenausziehführung nach Anspruch 7, **dadurch gekennzeichnet, dass** die Lagervorrichtung (6) zumindest einen vom Hubwälzkörper (15) gesonderten Stützwälzkörper (16) aufweist, wobei vorzugsweise vorgesehen ist, dass der zumindest eine Hubwälzkörper (15) und der zumindest eine Stützwälzkörper (16) einen gleichen Durchmesser aufweisen.

9. Schubladenausziehführung nach Anspruch 8, **dadurch gekennzeichnet, dass** der zumindest eine Hubwälzkörper (15) aus einem anderen Material als der zumindest eine Stützwälzkörper (16) besteht.

10. Schubladenausziehführung nach einem der Ansprüche 8 oder 9, **dadurch gekennzeichnet, dass** der Hubwälzkörper (15) weicher als der Stützwälzkörper (16) ausgebildet ist.

11. Schubladenausziehführung nach einem der Ansprüche 8 bis 10, **dadurch gekennzeichnet, dass** der Hubwälzkörper (15) aus Kunststoff und der zumindest eine Stützwälzkörper (16) aus Metall gebildet ist.

12. Schubladenausziehführung nach einem der Ansprüche 1 bis 11, **dadurch gekennzeichnet, dass** zwischen der Korpusschiene (2), und der Ausziehschiene (3a, 3b) von der Hubvorrichtung (4) gesonderte, lastübertragende Wälzkörper (17) angeordnet sind.

13. Schubladenausziehführung nach Anspruch 12, **dadurch gekennzeichnet, dass** die Wälzkörper (17) in einem gemeinsamen, verschiebbar gelagerten Laufwagen (18) angeordnet sind.

14. Schubladenausziehführung nach einem der Ansprüche 1 bis 13, **dadurch gekennzeichnet, dass** die Anhebevorrichtung (5) und die Lagervorrichtung (6) nacheinander auf einer Laufbahn (8) angeordnet sind.

15. Anordnung mit einer Schublade (21) und einer Schubladenausziehführung (1) nach einem der Ansprüche 1 bis 14.

## Claims

1. A drawer extension guide (1), comprising:
- a carcass rail (2) which can be fastened to a furniture carcass,
- at least one extension rail (3a, 3b) which is supported displaceable relatively to the carcass rail (2) between an open position and a closed position,
- at least one lifting device (4), by way of which the extension rail (3a, 3b) can be raised relative to the carcass rail (2) towards the end of the closing movement,
wherein the lifting device (4) is of at least two-part design, wherein the lifting device (4) has a raising device (5) for raising the extension rail (3a, 3b) and a bearing device (6) for supporting the extension rail (3a, 3b) in the closed position, **characterized in that** the raising device (5) is relieved of the extension rail (3a, 3b) in the closed position of the extension rail (3a, 3b).

2. The drawer extension guide according to claim 1, **characterized in that** the extension rail (3a, 3b) has an elevation (7) directed to the carcass rail (2) and/or the carcass rail (2) has an elevation (7) directed to the extension rails (3a, 3b).

3. The drawer extension guide according to claim 2, **characterized in that** the extension rail (3a, 3b) can be raised by the interaction of the elevation (7) and the raising device (5) and that the elevation (7) is supported by the bearing device (6) in the closed position.

4. The drawer extension guide according to claim 2 or 3, **characterized in that** the elevation (7) is formed by an embossing of the extension rail (3a, 3b) and/or of the carcass rail (2).

5. The drawer extension guide according to one of the claims 1 through 4, **characterized in that** the raising device (5) is formed by a first area (4a) and the bearing device (6) is formed by a second area (4b), wherein the first and second area (4a, 4b) are connected to each other.

6. The drawer extension guide according to claim 5, **characterized in that** the first area (4a), which is formed by the lifting device (4), is formed softer than the second area (4b) and/or is formed of another material than the second area (4b).

7. The drawer extension guide according to one of the claims 1 through 4, **characterized in that** the raising device (5) comprises at least one lifting rolling body (15).

8. The drawer extension guide according to claim 7, **characterized in that** the bearing device (6) comprises at least one supporting rolling body (16) which is separate from the lifting rolling body (15), wherein it is preferably provided that the at least one lifting rolling body (15) and the at least one supporting rolling body (16) have the same diameter.

9. The drawer extension guide according to claim 8, **characterized in that** the at least one lifting rolling body (15) consists of another material than the at least one supporting rolling body (16).

10. The drawer extension guide according to one of the claims 8 or 9, **characterized in that** the lifting rolling body (15) is formed softer than the supporting rolling body (16).

11. The drawer extension guide according to one of the claims 8 through 10, charaterized in that the lifting rolling body (15) consists of plastic and the at least one supporting rolling body (16) is made of metal.

12. The drawer extension guide according to one of the claims 1 through 11, **characterized in that** load transmitting rolling bodies (17), which are separate from the lifting device (4), are arranged between the carcass rail (2) and extension rail (3a, 3b).

13. The drawer extension guide according to claim 12, **characterized in that** the rolling bodies (17) are arranged in a common, displaceably supported carriage (18).

14. The drawer extension guide according to one of the claims 1 through 13, **characterized in that** the raising device (5) and the bearing device (6) are arranged one after the other on a rolling track (8).

15. An arrangement comprising a drawer (21) and a drawer extension guide (1) according to one of the claims 1 through 14.

## Revendications

1. Guidage télescopique pour tiroir (1), comprenant :
- un rail de corps (2) destiné à être fixé sur un corps de meuble,
- au moins un rail télescopique (3a, 3b) qui est supporté de façon à pouvoir coulisser par rapport au rail de corps (2) entre une position ouverte et une position fermée,
- au moins un dispositif de levage (4) par lequel le rail télescopique (3a, 3b) peut être soulevé vers la fin du mouvement de fermeture par rapport au rail de corps (2),
le dispositif de levage (4) étant constitué d'au moins deux parties, le dispositif de levage (4) présentant un dispositif de soulèvement (5) pour le soulèvement du rail télescopique (3a, 3b) ainsi qu'un dispositif de support (6) pour le soutien du rail télescopique (3a, 3b) dans la position de fermeture, **caractérisé en ce que** le dispositif de soulèvement (5) est libéré de la charge du rail télescopique (3a, 3b) dans la position de fermeture du rail télescopique (3a, 3b).

2. Guidage télescopique pour tiroir selon la revendication 1, **caractérisé en ce que** le rail télescopique (3a, 3b) présente une surélévation (7) dirigée vers le rail de corps (2) et/ou le rail de corps (2) présente une surélévation (7) dirigée vers les rails télescopiques (3a, 3b).

3. Guidage télescopique pour tiroir selon la revendication 2, **caractérisé en ce que** le rail télescopique (3a, 3b) peut être soulevé par la coopération de la surélévation (7) avec le dispositif de soulèvement (5), et **en ce que** la surélévation (7) s'appuie sur le dispositif de support (6) dans la position de fermeture.

4. Guidage télescopique pour tiroir selon la revendication 2 ou 3, **caractérisé en ce que** la surélévation (7) est formée par un estampage du rail télescopique (3a, 3b) et/ou du rail de corps (2).

5. Guidage télescopique pour tiroir selon l'une des revendications 1 à 4, **caractérisé en ce que** le dispositif de soulèvement (5) est constitué d'une première zone (4a), et le dispositif de support (6) est constitué d'une deuxième zone (4b), la première zone (4a) et la deuxième zone (4b) étant raccordées l'une à l'autre.

6. Guidage télescopique pour tiroir selon la revendication 5, **caractérisé en ce que** la première zone (4a), qui est formée du dispositif de levage (4), est constituée de façon plus tendre que la deuxième zone (4b) et/ou est formée d'un matériau différent de celui de la deuxième zone (4b).

7. Guidage télescopique pour tiroir selon l'une des revendications 1 à 4, **caractérisé en ce que** le dispositif de soulèvement (5) présente au moins un élément de roulement de levage (15).

8. Guidage télescopique pour tiroir selon la revendication 7, **caractérisé en ce que** le dispositif de support (6) présente au moins un élément de roulement de soutien (16) séparé de l'élément de roulement de levage (15), étant de préférence prévu que l'élément de roulement de levage (15) au moins au nombre de un et l'élément de roulement de soutien (16) au moins au nombre de un présentent un diamètre identique.

9. Guidage télescopique pour tiroir selon la revendication 8, **caractérisé en ce que** l'élément de roulement de levage (15) au moins au nombre de un se compose d'un matériau différent de celui de l'élément de roulement de soutien (16) au moins au nombre de un.

10. Guidage télescopique pour tiroir selon l'une des revendications 8 ou 9, **caractérisé en ce que** l'élément de roulement de levage (15) est constitué de façon plus tendre que l'élément de roulement de soutien (16).

11. Guidage télescopique pour tiroir selon l'une des revendications 8 à 10, **caractérisé en ce que** l'élément de roulement de levage (15) est formé de matière plastique et l'élément de roulement de soutien (16) au moins au nombre de un est formé de métal.

12. Guidage télescopique pour tiroir selon l'une des revendications 1 à 11, **caractérisé en ce que** des éléments de roulement (17) transmettant la charge, séparés du dispositif de levage (4), sont disposés entre le rail de corps (2) et le rail télescopique (3a, 3b).

13. Guidage télescopique pour tiroir selon la revendication 12, **caractérisé en ce que** les éléments de roulement (17) sont disposés dans un chariot (18) commun supporté de façon coulissante.

14. Guidage télescopique pour tiroir selon l'une des revendications 1 à 13, **caractérisé en ce que** le dispositif de soulèvement (5) et le dispositif de support (6) sont disposés l'un derrière l'autre sur une voie de roulement (8).

15. Agencement avec un tiroir (21) et un guidage télescopique pour tiroir (1) selon l'une des revendications 1 à 14.
